**Europäisches Patentamt**

**European Patent Office**

**Office européen des brevets**

(11) Numéro de publication: **0 063 975
B1**

# FASCICULE DE BREVET EUROPEEN

(45) Date de publication du fascicule du brevet:
**20.03.85**

(51) Int. Cl.⁴: **F 16 D 65/04,** F 16 D 55/22

(21) Numéro de dépôt: **82400603.5**

(22) Date de dépôt: **01.04.82**

(54) **Patin pour frein à disque et frein à disque équipé d'un tel patin.**

(30) Priorité: **14.04.81 FR 8107473**

(43) Date de publication de la demande:
**03.11.82 Bulletin 82/44**

(45) Mention de la délivrance du brevet:
**20.03.85 Bulletin 85/12**

(84) Etats contractants désignés:
**BE DE FR GB IT NL SE**

(56) Documents cités:
**EP - A - 0 002 150
FR - A - 2 268 989**

(73) Titulaire: **SOCIETE ANONYME D.B.A., Centre Paris Pleyel, F-93521 St-Denis Cédex 01 (FR)**

(72) Inventeur: **Gérard, Jean-Louis, 129, Bd Masséna, F-75013 Paris (FR)**
Inventeur: **Le Marchand, Claude, 8, Allée des Tilleuls, F-95330 Domont (FR)**

(74) Mandataire: **Poidatz, Emmanuel et al, Service Brevets Bendix 44 rue François 1er, F-75008 Paris (FR)**

## Description

L'invention se rapporte à un ensemble patin et support de couple pour frein à disque susceptible d'équiper un véhicule automobile, ainsi qu'un frein à disque comportant un tel ensemble.

On constate que le remplacement des patins sur des freins à disque des véhicules se fait de plus en plus par de la main d'oeuvre non spécialisée. Ceci est dû en grande partie aus tarifs horaires de plus en plus élevés des spécialistes. Les freins en général et les patins de frein en particuler étant des pièces fondamentales pour la sécurité du véhicule, il est apparu nécessaire de définir des formes de patins tels que même pour un non-spécialiste, il soit impossible de monter de façon impropre les patins sur un frein, lors des remplacements des éléments de friction par exemple. La demande de brevet français N° FR-A-2 268 989 montre une solution possible au problème en formant des encoches sur le support de couple qui permettent une introduction radiale des éléments de friction puis un ancrage de ceux-ci sur le support de couple par translation axiale. Cette solution présente néanmoins deux inconvénients, d'une part, des usinages supplémentaires sont nécessaires pour former les encoches et, d'autre part, un allongement général du frein et par conséquent, un accroissement inutile du poids. En effet, la longueur des saillies d'ancrage et de coulissement doit être agrandie pour permettre les déplacements axiaux des éléments de friction mais aussi un allongement du cylindre, le piston devant être repoussé au-delà de la course normale pour permettre le dégagement des éléments de friction.

La demande de brevet français N° A-2 409 423 représente une solution ne nécessitant pas d'allongement ni des guidages ni du cylindre mais cette solution représente un patin de frein à disque qui pourrait éventuellement être mal monté par un non-spécialiste; en effet, une des saillies de l'étrier destinée à l'ancrage et au coulissement du patin peut être montée non pas dans l'encoche prévue à cet effet dans le patin, mais dans le décrochement réalisé sur le porte-garniture et situé en-dessous de l'encoche.

L'invention a pour but de résoudre ce problème.

Dans cet esprit, l'invention se rapporte à un ensemble patin et support de couple pour frein à disque comportant un support de couple sur lequel sont formées des saillies circonférentiellement espacés d'ancrage et de coulissement d'un patin l'une desdites saillies étant formée au moyen d'une clavette amovible, ledit patin comportant une plaque porte-garniture sur laquelle est fixée une garniture de friction, ladite plaque étant d'une forme sensiblement rectangulaire et comportant une première paire de côtés sensiblement parallèles et cinconférentiellement espacées et une deuxième paire de côtés sensiblement parallèles et espacés radialement, chacun des côtés de la première paire comportant une encoche dont une première partie est sensiblement parallèle auxdits côtés de la deuxième paire et dont une seconde partie forme un angle aigu avec ladite première partie, lesdites saillies dudit support de couple ayant un profil conjugué audit profil desdites encoches, caractérisé en ce que le profil desdits côtés de la première paire est tel que tout point $\underline{P}$ décrivant ladite seconde partie, la distance entre ce point $\underline{P}$ et n'importe quel point de l'autre côté de le ladite première paire, autre qu'une zone de l'encoche associée, soit supérieure à la distance $\underline{D}$ des sommets desdites deux encoches augmentée d'une valeur prédéterminée $\underline{J.}$

L'invention vise également un frein à disque comportant des patins et un support de couple sur lequel sont formées des saillies circonférentiellement espacées d'ancrage et de coulissement desdits patins, caractérisé en ce que lesdites saillies ont un profil conjugué au profil desdites encoches, et en ce que la distance circonférentielle entre les sommets desdites saillies correspond à la distance des sommets desdites deux encoches augmentée d'une valeur prédéterminée.

On décrira maintenant à titre d'exemple non limitatif un mode de réalisation particulier de l'invention en se référant aux dessins annexés dans lesquels:

la figure 1 est une vue de face d'un patin de frein à disque monté correctement sur son support de couple;

la figure 2 est une vue de face d'un patin de frein à disque monté de façon incorrecte sur son support de couple; et

la figure 3 est une vue de face d'un patin de frein à disque réalisé conformément à l'invention et montrant que son montage incorrect est impossible.

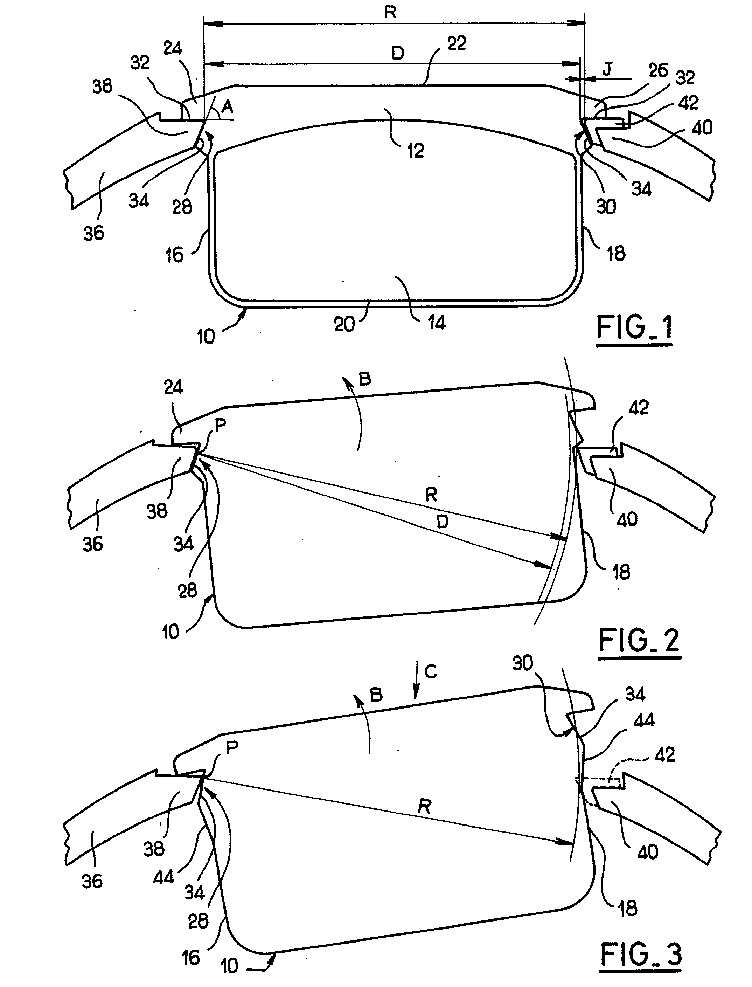

Le patin de frein à disque représenté sur les figures 1 et 2 appelé dans son ensemble par la référence 10 comporte un porte-garniture 12 sur lequel est fixée une garniture de friction 14. Le porte-garniture 12 a une forme sensiblement ractangulaire et comporte une première paire de côtés 16 et 18 sensiblement parallèles et espacés circonférentiellement. Le porte-garniture 12 comporte également une seconde paire de côtés 20 et 22 sensiblement parallèles et espacés radialement. Chacun des côtés 16 et 18 comporte une saillie, respectivement 24 et 26, dans lesquelles sont formées des encoches 28 et 30 respectivement. Chacune de ces encoches 28 et 30 est formée par une première partie 32 sensiblement parallèle au côté 22 et par une deuxième partie 34 qui forme avec la première partie 32 un angle aigu A. On designe par D la distance entre les sommets des deux encoches 28 et 30. Sur les figures 1 et 2 on a également représenté partiellement le support de couple d'un frein destiné à recevoir le patin 10. Ce support de couple 36 comporte des saillies 38 et 40 d'un profil conjugué au profil des encoches 28 et 30. La saillie 40 étant réalisée au moyen d'une clavette 42 amovible axialement. Le patin 10 étant susceptible de coulisser axialement au moyen de ces encoches 28 et 30 sur les saillies 38 et 40, il existe nécessairement un jeu fonctionnel entre les encoches du patin 10 et les saillies du support de couple 36. Ce jeu fonctionnel J est défini entre le sommet de l'encoche du patin et le sommet de la saillie du support de couple, ce jeu J ayant une valeur prédéterminée, comprise entre deux valeurs extrêmes définies pour un ancrage et un coulissement correct du patin 10. On désigne par R la distance qui existe entre les saillies 38 et 40 du support de couple, la valeur de R est égale à D + J. En se reportant à la figure 2 sur laquelle la garniture 14 n'a pas été représentée pour une facilité de compréhension, on voit que le patin 10 à été basculé dans le sens de la flèche B autour de la saillie 38. Le patin 10 est en contact avec la saillie 38 en un point P de la deuxième partie 34 de l'encoche 28, ce point P correspondant au contact du sommet de la saillie 38 et de la deuxième partie 34. Ce point étant défini par l'angle de basculement du patin 10 par rapport au support de couple 36 et à la longueur de la saillie 24 qui prend également appui sur la saillie 38. Lorsque l'on trace à partir du point P une portion de cercle centrée sur P et ayant pour rayon R on s'aperçoit que le côté 18 du patin 10 présente deux zones se trouvant à l'intérieur du cercle de rayon R. Etant donné que R représente la distance entre les saillies 38 et 40 du support de couple 36, on comprend qu'il est possible dans ces conditions de monter le patin soit de la façon représentée sur la figure 1 qui est correcte soit de la façon représentée sur la figure 2 qui ne l'est pas.

En se reportant à la figure 3 où les mêmes éléments portent les mêmes références, la portion de cercle de rayon R centrée sur le point P ne détermine qu'une seule zone intérieure au rayon R qui est une partie de l'encoche 30. L'extrémité de la partie 34 de l'encoche 30, opposée au sommet de l'encoche, est reliée au côté 18 par une portion droite 44 inclinée d'une manière telle que le profil du côté 18 et de la portion droite 44 ne coupe pas le cercle de rayon R. Le montage de la clavette 42 est alors impossible autrement que dans l'encoche 30. Comme le montre la figure 3, la clavette 42 et le côté 19 présentent une zone d'interférences rendant impossible le montage de ladite clavette 42.

Le patin qui vient d'être décrit se monte de la façon suivante:

La clavette 42 étant enlevée de la saillie 40 formée sur le support de couple 36, le patin est présenté suivant la flèche C (voir figure 3) entre les saillies 38 et 40 du support de couple 36. Les côtés 16 et 18 sont engagés entre lesdites saillies. Le patin 10 est alors basculé dans le sens de la flèche B afin de faire pénétrer la saillie 38 dans l'encoche 28 comme représenté sur la figure 3. Le patin 10 est ensuite basculé dans le sens contraire de la flèche B de manière à ce que l'encoche 30 se trouve en vis-à-vis de la saillie 40.

Au cours de ce basculement, le point de contact P entre la saillie 38 et le patin 10 se déplace le long de la partie 34 de l'encoche 28. Comme il apparaît sur la figure 3, la clavette 42 ne peut être montée que lorsque l'encoche 30 se trouve en vis-à-vis de la saillie 40; en effet, tout au long du basculement du patin 10, le profil du côté 18 ne permet pas le montage de la clavette 42. L'encoche 30 se touvant dans la bonne position par rapport à la saillie 40 on procède au montage de la clavette 42, glissée entre la saillie 40 et le patin 10 pour prendre sa position normale comme représenté sur la figure 1. Le patin 10 est alors verrouillé dans la bonne position sur le support de couple 36.

On voit ainsi que grâce à l'invention le montage incorrect d'un patin de frein à disque par un non-spécialiste est rendu impossible.

Il est bien évident que les portions 44 peuvent être droites comme représentées sur la figure 3 ou avoir toute forme qui assure une distance supérieure au rayon R entre le point P et le côté 18 du patin. On voit que l'invention permet également d'éviter un montage incorrect dans le cas d'un mauvais positionnement de la saillie 38 par rapport à l'encoche 28, même si la saillie 40 et la clavette 42 sont correctement montées dans l'encoche 30.

## Revendications

1. Ensemble patin et support de couple pour frein à disque du type comportant un support de couple (36) sur lequel sont formées des saillies (38, 40) circonférentiellement espacés d'ancrage et de coulissement d'un patin (10) l'une desdites saillies étant formée au moyen d'une clavette amovible (42), ledit patin comportant une plaque porte-garniture (12) sur laquelle est fixée une garniture de friction (14), ladite plaque (12) étant d'une forme sensiblement rectangulaire et comportant une première paire de côtés (16, 18) sensiblement parallèles et circonférentielles espacés et une deuxième paire de côtés (20, 22) sensiblement parallèles et espacés radialement, chacun des côtés (16, 18) de la première paire comportant une encoche (28, 30) dont une première partie (32) est sensiblement parallèle auxdits côtés (20, 22) de la deuxième paire et dont une seconde partie (34) forme un angle aigu (A) avec ladite première partie (32), lesdites saillies (38, 40) dudit support de couple (36) ayant un profil conjugué audit profil desdites encoches (28, 30), caractérisé en ce que le profil desdits côtés (16, 18) de la première paire est tel que tout point (P) décrivant ladite seconde partie (34), la distance entre ce point (P) et n'importe quel point de l'autre côté (16, 18) de ladite première paire, autre qu'une zone de l'encoche (28, 30) associée, soit supérieure à la distance (D) des sommets desdites deux encoches (28, 30) augmentée d'une valeur prédéterminée (J).

2. Ensemble patin et support de couple selon la revendication 1, caractérisé en ce que chaque côté (16, 18) de la première paire commporte une saillie (24, 26) dans laquelle est formée ladite encoche (28, 30).

3. Ensemble patin et support de couple selon la revendication 2, caractérisé en ce que l'extrémité opposée au sommet de l'encoche (28, 30) de ladite seconde partie (34) de chacune desdites encoches (28, 30) est reliée au côté correspondant (16, 18) de ladite première paire de côtés (16, 18) au moyen d'une portion droite (44).

4. Frein à disque comprenant l'ensemble patin et support de couple selon l'une des revendications précédentes, caractérisé en ce que la distance circonférentielle (R) entre les sommets desdites saillies (38, 40) correspond à la distance (D) des sommets desdites deux encoches (28, 30) augmentée d'une valeur prédéterminée (J).

## Claims

1. A brake pad and torque member assembly for a disc brake of the type comprising a torque member (36), on which circumferentially spaced projections (38, 40) are formed for anchoring and slidingly supporting a brake pad (10), one of said projections being formed by means of a removable key (42), said brake pad comprising a support plate (12) and a friction member (14) fixed thereto, said support plate (12) being of substantially rectangular shape and comprising a first pair of substantially parallel and circumferentially spaced sides (16, 18) and a second pair of substantially parallel and radially spaced sides (20, 22), each of the sides (16, 18) of the first pair comprising a groove (28, 30) having a first portion (32) substantially parallel to said sides (20, 22) of the first pair and a second portion (34) forming an acute angle (A) with said first portion (32), said projections (38, 40) of the torque member (36) having a profile conforming to the profile of said grooves (28, 30), characterized in that the profile of said sides (16, 18) of the first pair is such that with respect to each point (P) on said second portion (34) the distance between this point (P) and any point of the other side (16, 18) of said first pair except for an area of the associated groove (28, 30) exceeds the distance (D) between the apices of the two grooves (28, 30) plus a predetermined value (J).

2. The brake pad and torque member assembly of claim 1, characterized in that each side (16, 18) of the first pair comprises a projection (24, 26) wherein said groove (28, 30) is formed.

3. The brake pad and torque member assembly of claim 2, characterized in that the extremity opposite to the apex of the groove (28, 30) of said second portion (34) of each of said grooves (28, 30) is connected to the corresponding side (16, 18) of said first pair of sides (16, 18) by means of a straight portion (44).

4. A brake disc comprising the brake pad and torque member assembly of any of the preceding claims, characterized in that the circumferential distance (R) between the apices of said projections (38, 40) correspond to the distance (D) of the apices of said grooves (28, 30) plus a predetermined value (J).

**Patentansprüche**

1. Bremsbacken-Bremsträger-Anordnung für eine Scheibenbremse, mit einem Bremsträger (36), an dem in Umfangsrichtung beabstandete Vorsprünge (38, 40) zur Verankerung und Gleitlagerung eines Bremsbackens (10) gebildet sind, von denen der eine Vorsprung mittels eines entfernbaren Keilstücks (42) gebildet ist, wobei der Bremsbacken eine Belagträgerplatte (12) aufweist, an der ein Reibbelag (14) befestigt ist, und die Belagträgerplatte (12) eine im wesentlichen rechteckige Form hat sowie ein erstes Paar von im wesentlichen parallel verlaufenden und in Umfangsrichtung beabstandeten Seiten (16, 18) sowie ein zweites Paar von im wesentlichen parallel verlaufenden und radial beabstandeten Seiten (20, 22) aufweist, wobei jede der Seiten (16, 18) des ersten Paares mit einer Einkerbung (28, 30) versehen ist, die einen im wesentlichen parallel zu den Seiten (20, 22) des ersten Paares verlaufenden ersten Abschnitt (32) und einen mit dem ersten Abschnitt (32) einen spitzen Winkel (A) bildenden zweiten Abschnitt (34) aufweist, wobei die Vorsprünge (38, 40) des Bremsträgers (36) ein zum Profil der Einkerbungen (28, 30) konformes Profil haben, dadurch gekennzeichnet, dass das Profil der Seiten (16, 18) des ersten Paares derart ist, dass für jeden Punkt (P) des ersten Abschnitts (34) der Abstand zwischen diesem Punkt (P) und irgendeinem Punkt auf der anderen Seite (16, 18) des ersten Paares, ausser im Bereich der zugehörigen Einkerbung (28, 30), grösser ist als der Abstand (D) der Spitzen der beiden Einkerbungen (28, 30), vergrössert um einen vorgegebenen Wert (J).

2. Bremsbelag-Bremsträger-Anordnung nach Anspruch 1, dadurch gekennzeichnet, dass jede Seite (16, 18) des ersten Paares einen Vorsprung (24, 26) aufweist, in dem die besagte Einkerbung (28, 30) gebildet ist.

3. Bremsbelag-Bremsträger-Anordnung nach Anspruch 2, dadurch gekennzeichnet, dass das Ende, das der Spitze der Einkerbung (28, 30) des zweiten Abschnitts (34) jeder Einkerbung (28, 30) gegenüberliegt, mit der entsprechenden Seite (16, 18) des ersten Paares mittels eines geradlinigen Abschnitts (44) verbunden ist.

4. Scheibenbremse mit einer Bremsbelag-Bremsträger-Anordnung nach einem der vorhergehenden Ansprüche, dadurch gekennzeichnet, dass der in Umfangsrichtung gemessene Abstand (R) zwischen den Spitzen der Vorsprünge (38, 40) dem Abstand (D) zwischen den Spitzen der beiden Einkerbungen (28, 30), vergrössert um einen vorgegebenen Wert (J), entspricht.

FIG_1

FIG_2

FIG_3